Europäisches Patentamt

European Patent Office

Office européen des brevets

(19)

(11) Veröffentlichungsnummer: **0 158 046**
**B1**

(12)
# EUROPÄISCHE PATENTSCHRIFT

(45) Veröffentlichungstag der Patentschrift:
20.05.87

(51) Int. Cl.⁴: **F 02 M 35/10**, F 16 L 13/00

(21) Anmeldenummer: **85101660.0**

(22) Anmeldetag: **15.02.85**

(54) **Verbindung zweier Bauteile, insbesondere zweier Kunststoffhalbschalen.**

(30) Priorität: **16.02.84 DE 3405456**

(43) Veröffentlichungstag der Anmeldung:
**16.10.85 Patentblatt 85/42**

(45) Bekanntmachung des Hinweises auf die Patenterteilung:
**20.05.87 Patentblatt 87/21**

(84) Benannte Vertragsstaaten:
**FR GB IT SE**

(56) Entgegenhaltungen:
**DE-A-2 214 373**
**DE-A-2 340 035**
**DE-A-2 403 090**
**US-A-3 455 336**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Jeschonnek, Peter, Heubergstrasse 22, D-8152 Feldkirchen- Westerham (DE)**

(74) Vertreter: **Dexheimer, Rolf, Bayerische Motoren Werke Aktiengesellschaft Postfach 40 02 40 Petuelring 130 - AJ- 31, D-8000 München 40 (DE)**

### Beschreibung

Die Erfindung bezieht sich auf eine Verbindung zweier Bauteile, insbesondere zweier Kunststoff-Halbschalen für die Sauganlage einer Brennkraftmaschine, nach dem Oberbegriff des Patentanspruchs 1. Eine derartige Verbindung wird häufig zum Herstellen von hohlen Kunststoffbauteilen verwendet, deren Hohlräume nicht oder nur sehr kompliziert entformbar wären.

Diese Verbindungen befriedigen bisher in der Praxis dann noch nicht, wenn sie - wie beispielsweise bei einer Sauganlage einer Brennkraftmaschine - dauerhaft hoch belastbar sein sollen und dabei eine stets sehr hohe Dichtheit gefordert wird. Das im Querschnitt in der Regel weitgehend C-förmige Verbindungselement, des beispielsweise Halbschale, längs des äußeren Randes der beiden Verbindungsflansche zusammenspannt und das häufig aus dem gleichen oder einem ähnlichen Kunststoff besteht wie die Halbschalen, übt seine Klammerwirkung hauptsächlich im äußeren Randbereich der Verbindungsflansche aus. Dies hat zur Folge, daß bei hohen Innendruckbelastungen in dem von den Bauteilen umschlossenen Innenraum, beispielsweise bei gelegentlichem Flammrückschlag in einer Sauganlage, der Spalt in der Trennebene der beiden Halbschalen mehr und mehr auffedern kann, worauf der Hohlkörper undicht wird und schließlich zu Bruch gehen kann.

Aus der US-A-3 455 336 ist es bereits bekannt, zwei aneinander angrenzende Wandungsabschnitte einer Umhüllung durch ein langgestrecktes, im Querschnitt C-förmiges Klammerelement zu verbinden, das auf entsprechend ausgebildete Flansche in der Längsrichtung aufgeschoben und bei Bedarf auch wieder von diesen Flanschen abgezogen werden kann. Dabei ist auch die Möglichkeit angesprochen, die beiden Flansche der Hülle in einem eigenen Erwärmungsvorgang anzuschmelzen und dadurch eine innigere Verbindung zu erhalten. Es ist auch bei einer solchen Verbindung äußerst schwierig, durch das Klammerelement so hohe Anpreßkräfte aufrechtzuerhalten, daß eine spaltfreie V erbindung erhalten wird. Dies ist aber bei hohen Innendrücken unerläßlich, da die durch Spalte bewirkte erhöhte Kerbwirkung im Bereich der Verbindung schon nach kurzer Zeit zu einem Ausfall von den Bauteilen gebildeten Körpers führt.

Der Erfindung liegt die Aufgabe zugrunde, eine Verbindung zweier Bauteile der eingangs genannten Art zu schaffen, die eine äußerst hohe Dichtigkeit und eine hohe Festigkeit des gesamten von den Bauteilen gebildeten Körpers, insbesondere bei hoher Innendruckbelastung, gewährleistet.

Diese Aufgabe wird erfindungsgemäß durch eine Verbindung zweier Bauteile mit den Merkmalen des Patentanspruchs 1 gelöst.

Dadurch, daß die beiden Verbindungsflansche nur entlang des schmalen Dichtrandes miteinander - unter Zwischenlage der Kleberschicht - in Kontakt stehen, ist es einfacher, diesen Kontaktbereich spaltfrei zu erhalten. Bei einem großflächigeren Kontaktbereich ist wesentlich mehr Zusammenpreßkraft aufzubringen, um insbesondere in der Zone an der Innenwandung der beiden Halbschalen jegliche Spalte zu vermeiden. Das im Querschnitt klammerartige Verbindungselement in Verbindung mit dem den Längskanal ausfüllenden Material, das mit den Flanschen auch eine feste Verbindung eingeht, preßt den Klebebereich der Verbindung auch unmittelbar nach dem Entnehmen des Körpers aus dem Umspritzwerkzeug so innig zusammen, daß der Kleber noch nachhärten kann und nach seinem völligen Aushärten eine völlig spaltfreie und hochbelastbare Verbindung geschaffen ist. Eine auf diese Weise hergestellte Sauganlage einer Brennkraftmaschine widersteht auch höchsten gelegentlichen Innendruckbeanspruchungen, die sich dadurch ergeben können, daß das Verbrennungsgemisch durch Flammrückschlag vom Verbrennungsraum des Motors schon im Ansaugsystem entzündet wird.

Bei dem bevorzugten Ausführungsbeispiel haben beide Verbindungsflansche im Querschnitt an den Dichtrand angrenzend nach außen eine Ausnehmung, die zusammen den Langskanal bilden, der zumindest abschnittsweise mit dem Querschnitt des klammerartigen Verbindungselementes in Verbindung steht und mit dessen Material ausgefüllt ist. Geht der Querschnitt des Längskanals dabei vorzugsweise entlang der ganzen äußeren Randbereiche beider Verbindungsflansche in den Querschnitt des C-förmigen Verbindungselementes über, so findet ein direkter Kontakt der Halbschale nur entlang der mit der ganz dünnen Diffusionskleberschicht, beispielsweise einer Resorcinkleberschicht, versehenen innenliegenden Dichtränder statt. Die "direkten" Kontaktflächen sind auf diese Weise zwar weiter verringert, doch sind die Zusammenpreßkräfte, die erforderlich sind, um die nur mit einem gewissen Verzug herstellbaren Halbschalen entlang der gesamten Länge der Dichtränder auch während einer gegebenenfails längeren Aushärtezeit des Diffusionsklebers fest gegeneinander zu drücken, geringer und technisch besser beherrschbar. Die Aushärtezeit kann auch bei Wärmezufuhr nach dem Entformen mehrere Stunden betragen und ohne Wärmezufuhr auch über vierundzwanzig Stunden liegen. Nach dem Entformen werden die Halbschalen zuerst wohl überwiegend durch die Klammerwirkung des C-förmigen Verbindungselementes zusammengepreßt. Mit zunehmender Aushärtezeit treten zu den durch die reine Klammerwirkung hervorgerufenen Verbindungskräften mehr und mehr auch die Verbindungskräfte, die auf der reinen Klebewirkung beruhen.

Da - wie bereits erwähnt- wegen der geringeren "direkten" Kontaktflächen die für eine spaltfreie Verbindung erforderlichen Zusammenpreßkräfte geringer sind als bei Verbindungsflanschen mit größeren Kontaktflächen, sind auch die in den Halbschalen nach dem Umspritzen vorhandenen Eigenspannungen deutlich niedriger. Dies führt wiederum zu einer höheren Belastbarkeit und Dichtheit des aus den Bauteilen gefertigten Körpers.

Besonders vorteilhaft ist es, außer dem Dichtrand auch die gesamten Wandungen des Längskanals mit einer Kleberschicht zu versehen. Auf diese Weise läßt sich die Fläche, mit der die Verbindungsflansche nach dem Aushärten des Klebers zusätzlich durch Verkleben miteinander verbunden sind, noch wesentlich erhöhen. Der hohe Spritzdruck, mit dem das Material des Verbindungselements und das den Längskanal ausfüllende Material eingespeist wird, sowie die hohe Temperatur dieses Materials gewährleisten dabei einen besonders guten Verbund zwischen diesem Material und den Wandungen des Längskanals. Man kann als Spritzmaterial praktisch das gleiche Material verwenden, das zuvor zur Herstellung der Halbschalen verwendet wurde, beispielsweise Kunststoff, dessen Granulat schon mit Glasfasern oder ähnlichem versehen ist.

Bei dem besonders bevorzugten Ausführungsbeispiel ist das klammerartige Verbindungselement an den äußeren Randbereichen des mehrteiligen Hohlkörpers im wesentlichen C-förmig, wobei der äußere Rand jedes Verbindungsflansches quer zum Längskanal verlaufende Ausnehmungen in Form von breiteren Einschnitten aufweist, die von Haltestegen des Verbindungselementes ausgefüllt sind. Diese Haltestege erstrecken sich etwa von einem C-Schenkel des Verbindungselements zum anderen. Die Haltestege können in den Längskanal reichen und mit dem diesen Kanal ausfüllenden Material verbunden sein bzw. in dieses Material übergehen. Sie fungieren als Zuganker, die in gewissen Abständen einem Aufweiten der C-Klammer entgegenwirken, die so die Halbschalen auch schon gleich nach dem Entformen noch zuverlässiger zusammenspannen kann.

Weitere besondere zweckmäßige Einzelheiten der Erfindung, die auch Gegenstand von Unteransprüchen sind, sind im folgenden anhand eines in der Zeichnung dargestellten Ausführungsbeispiels näher erläutert. Es zeigen

Fig. 1 eine Teilaufsicht auf einen Hohlkörper, der aus zwei Halbschalen zusammengesetzt ist und zwei einander benachbarte Hohlräume aufweist;

Fig. 2 einen Schnitt nach der Linie II-II in Fig. 1;

Fig. 3 einen Schnitt nach der Linie III-III in Fig. 1;

Fig. 4 einen Schnitt nach der Linie IV-IV in Fig. 1, jedoch in vergrößertem Maßstab und

Fig. 5 eine perspektivische Ansicht des Verbindungsflansches eines Bauteils.

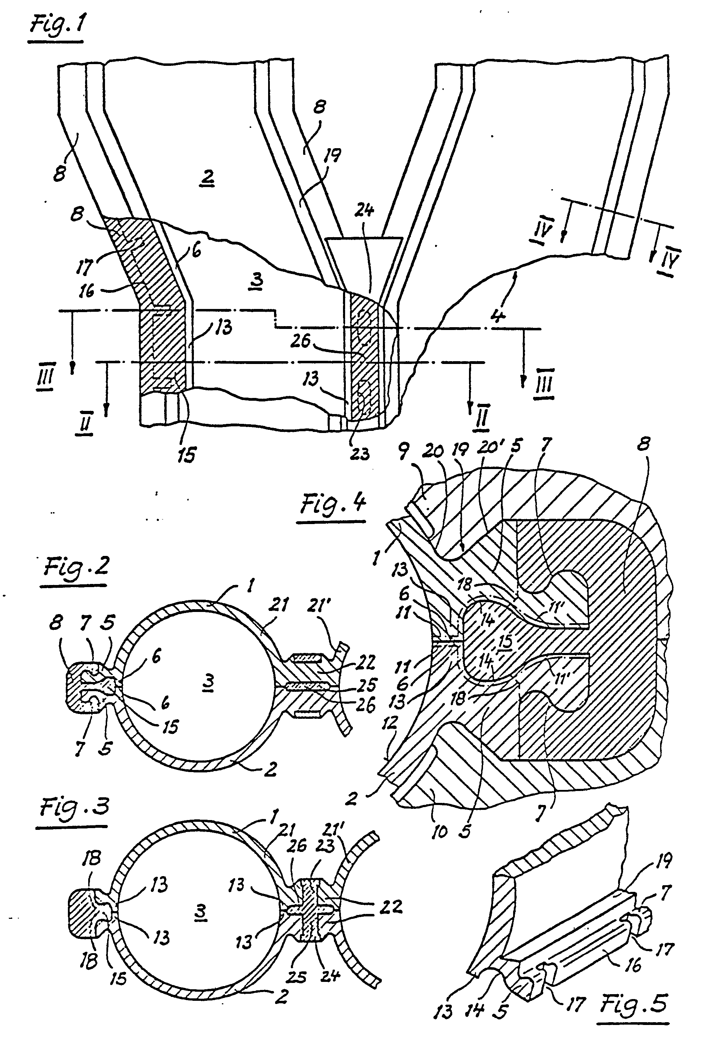

In der Zeichnung ist ein Hohlkörper dargestellt, der im wesentlichen aus zwei Halbschalen 1 und 2 gebildet ist und zwei benachbarte Hohlräume 3 und 4 aufweist. Die Halbschalen 1, 2 bestehen aus Kunststoff und haben an ihren äußeren Rändern Verbindungsflansche 5 mit einander zugekehrten Dichtflächen 6 (Fig. 4). Im Bereich ihrer äußeren Ränder und ihres Rückens haben die Verbindungsflansche 5 ferner Hinterschneidungen 7. Die äußeren Ränder der Verbindungsflansche 5 und die Hinterschneidungen 7 werden von einem im Querschnitt etwa C-förmigen Verbindungselement 8 umgriffen, das ebenfalls aus Kunststoff besteht und durch Umspritzen (der beiden Verbindungsflansche 5) hergestellt ist. Die zwei Werkzeughälften 9 und 10, die für das Umspritzen benötigt werden, sind in Fig. 4 der Zeichnung angedeutet. Die Dichtflächen 6 sind mit einer in Fig. 4 in sstrichpunktierten Linien angedeuteten und auf den Kunststoff abgestimmten Diffusionskleberschicht 11 versehen.

Wie man weiterhin insbesondere in Fig. 4 erkennen kann, haben die die Hohlräume 3 bzw. 4 umschließenden Halbschalen 1 und 2 angrenzend an ihre jeweilige Innenwandung 12 an ihren Verbindungsflanschen 5 einander zugekehrte schmale Dichtränder 13 mit ebenen Berührungsflächen, die mit der Kleberschicht 11 versehen sind.

Die Verbindungsflansche 5 haben im Querschnitt an den Dichtrand 13 nach außen angrenzend jeweils eine Ausnehmung 14, die zusammen einen parallel zu den Dichträngern 13 verlaufeden Längskanal 15 bilden. Der Längskanal 15 ist zumindest abschnittsweise mit dem Querschnitt des Verbindungselements 8 in Verbindung und mit dem Material ausgefüllt, aus dem auch des Verbindungselement 8 besteht. D.h., beim Einspritzen des Materials des Verbindungselements 8 tritt dieses Material auch in den Längskanal 15 ein.

Außer den Dichträndern 13 der beiden Verbindungsflansche 5 sind auch die Wandungen des Längskanals 15 mit einer dünnen Kleberschicht 11' versehen, wie dies in Fig. 4 ebenfalls in strichpunktierten Linien angedeutet ist.

Insbesondere in Fig. 5, aber auch in Fig. 1, ist zu erkennen, daß der äußere Rand 15 jedes Verbindungsflansches 5 quer zum Längskanal 15 verlaufende Ausnehmungen 17 in Form von breiteren senkrecht zum Rand 16 verlaufenden Schlitzen hat, die von in Fig. 4 angedeuteten Haltestegen 15 des Verbindungselementes 8 ausgefüllt sind. Die Haltestege 18 erstrecken sich etwa von einem C-Schenkel des Verbindungselementes 8 zum anderen. Die Haltestege 18 reichen in den Längskanal 15 und gehen in das diesen Kanal ausfüllende Material über. Sie werden also mit dem Verbindungselement 8 und der sogenannten, den Längskanal 15 ausfüllenden "Seele" im gleichen Spritzvorgang hergestellt.

Nach Fig. 4 der Zeichnung hat jeder Verbindungsflansch auf seiner der Dichtfläche 6 abgekehrten Seite eine Angriffsfläche 19 für die Werkzeughälften 9 und 10 eines Spritzoder Gießwerkzeugs, die je den Verbindungsflansch 5 jeweils in einer zur Trennebene der beiden Halbschalen 1, 2 parallelen Richtung fixieren. Hierzu könnte an dem Verbindungsflansch beispielsweise eine gesonderte, im Querschnitt firstförmige Halterippe vorgesehen sein. Bei dem dargestellten Ausführungsbeispiel ist die erwähnte Angriffsfläche 19 durch eine rinnenartige Vertiefung gebildet, die schräge Seitenwände 20 und 20 hat. Die Seitenwand 20 geht in die Außenwandung der beiden Halbschalen 1 und 2 über und die andere Seitenwand 20' in die Außenkontur des Verbindungselements 8 (Fig. 4). Die Werkzeughälften 9 und 10 haben Preß- und Formkonturen mit entsprechend geneigten Angriffsflächen. Die Werkzeuge bringen auf diese Weise nicht nur den für eine hoch belastbare Verklebung der Dichtränder 13 erforderlichen Anpreßdruck auf die beiden Halbschalen 1 und 2 auf. Sie fixieren auch die Ränder der Halbschalen in einer zur Trennebene parallelen Richtung zuverlässig gegen die aus dem Spritzdruck resultierenden Kräfte. Dies ist besonders wichtig, damit die Wandungen der Halbschalen 1 und 2 unter der Wirkung des Spritzdrucks, der bis zu 400 bar betragen kann, nicht nach innen ausweichen, was zu einer merklichen Schwächung des Querschnitts der inneren Enden der C-Schenkel des Verbindungselementes 8 und damit der ganzen Verbindung führen würde.

Der in den Fig. 1 bis 3 erkennbare Hohlkörper hat zwei Halbschalen 1 und 2, die jeweils eng benachbarte Wandungsabschnitte 21 und 2l'aufweisen, deren angrenzende Verbindungsflansche einen gemeinsamen Zwischenflansch 22 bilden. In diesen Bereichen des zweischaligen Hohlkörpers weist jeder Zwischenflansch 22 abschnittsweise mittige Durchbrechungen 23 auf und das klammerartige Verbindungselement 24 hat in diesem Bereich annähernd T-Querschnitt, dessen Steg 25 die Durchbrechung 23 jeweils durchsetzt. Es handelt sich dabei um des sonderfall bei dem zwei C-Klammern mit ihren Stegen so nahe aneinanderrücken, daß ein gemeinsamersteg und insgesamt ein zuganker ensteht.

Der Zwischenflansch 22 hat an seinen an die Innenwandungen 12 angrenzenden Bereichen ebenfalls Dichtränder 13, die wie die Dichtränder 13 der äußeren Verbindungsflansche 5 mit einer Kleberschicht versehen sind. Analog zu dem Längskanal 15 der Verbindungsflansche 5 ist ferner jeder Zwischenflansch 22 angrenzend an den Dichtrand 13 mit einer Ausnehmung zur Bildung eines Längskanals 25 versehen, der in die bereits erwähnten Durchbrechungen 23 übergeht. Auch die Innenwandungen des Längskanals 26 sind mit einer Kleberschicht versehen. Auf diese Weise ist mit einem nur an die Verhältnisse eng benachbarter Wandungsabschnitte 21 und 21' angepaßten Verbindungsprinzip, wie es anhand der äußeren Ränder des Hohlkörpers schon beschrieben wurde, auch in dem mittleren Bereich des Hohlkörpers eine sehr dichte und hoch belastbare Verbindung der beiden Halbschalen 1 und 2 gewährleistet. Das Spritzen des inneren Verbindungselementes 24 erfolgt natürlich gleichzeitig mit dem Spritzen des äußeren, an den Randbereichen vorgesehenen Verbindungselementes 8.

Nach dem insbesondere in den Fig. 2 bis 4 dargestellten und erläuterten Verbindungsprinzip können die Schalenteile einer aus Kunststoff bestehenden Sauganlage einer Brennkraftmaschine gefertigt sein. Dabei sind bei einer Wandstärke der Halbschalen 1, 2 zwischen 1 und 4 mm Dichtränder 13 im einer Breite von 1 bis 2 mm vorgesehen. Der Längskanal 15 hat bei diesem Anwendungsfall beispielsweise eine Breite von 3 bis 6 mm und eine Hohe von 1,5 bis 4 mm. Mit der beschriebenen Verbindungstechnik lassen sich Sauganlagen herstellen, die gegenüber solchen, die nach dem eingangs beschriebenen vorbekannten Verfahren hergestellt sind, einem um das vier- bis fünffache höheren Berstdruck standhalten. Bei einem Rohrrinnendurchmesser von 40 mm werden bei Raumtemperatur Berstdrücke von 35 bar erreicht.

**Patentansprüche**

1. Verbindung zweier Bauteile, insbesondere zweier Kunststoff-Halbschalen für die Sauganlage einer Brennkraftmaschine, die Verbindungsflansche mit einander zugekehrten Dichtflächen und äußeren Hinterschneidungen aufweisen, wobei ein durch Umspritzen oder Umgießen hergestelltes, im Querschnitt klammerartiges Verbindungselement die Ränder und die Hinterschneidungen der Verbindungsflansche umgreift, dadurch gekennzeichnet, daß wenigstens eines der einen Hohlraum (3, bzw. 4) umgebenden Bauteile (Halbschalen 1, 2) angrenzend an seine Innenwandung (12) an seinem Verbindungsflansch (5) einen zur Dichtfläche (6) des anderen Bauteils vorstehenden schmalen Dichtrand (13) aufweist, der mit einer Kleberschicht (11) versehen ist, und daß in wenigstens einem der Verbindungsflansche (5) im Querschnitt an den Dichtrand (13) angrenzend nach außen eine Ausnehmung (14) vorgesehen ist, die mit dem anderen Verbindungsflansch einen parallel zu dem Dichtrand (13) verlaufenden Längskanal (15) bildet, der zumindest abschnittsweise mit dem Querschnitt des klammerartigen Verbindungselements (8) in Verbindung steht und mit dem Material des Verbindungselements (8) ausgefüllt ist.

2. Verbindung nach Anspruch 1, dadurch gekennzeichnet, daß die Verbindungsflansche (5) beider Bauteile (Halbschalen 1, 2) einander zugekehrte Dichtränder (13) mit ebenen Berührungsflächen haben.

3. Verbindung nach Anspruch 1, dadurch gekennzeichnet, daß beide Verbindungsflansche (5) eine Ausnehmung (14) aufweisen, die zusammen im wesentlichen den Längskanal (15) bilden.

4. Verbindung nach Anspruch 1, dadurch gekennzeichnet, daß außer dem Dichtrand (13) auch die Wandungen des Längskanals (15) mit einer Kleberschicht (11') versehen sind.

5. Verbindung nach Anspruch 1 mit einem im Querschnitt etwa C-förmigen Verbindungselement, dadurch gekennzeichnet, daß der äußere Rand (16) jedes Verbindungsflansches (5) quer zum Längskanal (15) verlaufende Ausnehmungen (17) aufweist, die von Haltestegen (18) des Verbindungselementes (8) ausgefüllt sind, die sich etwa von einem C-Schenkel des Verbindungselementes (8) zum anderen erstrecken.

6. Verbindung nach Anspruch 5, dadurch gekennzeichnet, daß die Haltestege (18) in den Längskanal (15) reichen und in das diesen Kanal ausfüllende Material übergehen.

7. Verbindung nach Anspruch 1, dadurch gekennzeichnet, daß jeder Verbindungsflansch (5) auf seiner der Dichtfläche abgekehrten Seite eine Angriffsfläche (Vertiefung 19) für ein Spritz- oder Gießwerkzeug hat, das den Verbindungsflansch (5) jeweils in einer zur Trennebene parallelen Richtung fixiert.

8. Verbindung nach Anspruch 7, dadurch gekennzeichnet, daß die Angriffsfläche durch eine rinnenartige Vertiefung (19) gebildet ist.

9. Verbindung nach Anspruch 8, dadurch gekennzeichnet, daß die Vertiefung (19) schräge Seitenwände (20, 21) hat, von denen eine in die Außenwandung des zugeordneten Bauteils (Halbschalen 1, 2) und die andere in die Außenkontur des klammerartigen Verbindungselementes (8) übergeht.

10. Verbindung nach Anspruch 1, dadurch gekennzeichnet, daß bei einer Wandstärke der Bauteile (Halbschalen 1, 2) zwischen 1 und 4 mm der Dichtrand (13) eine Breite von 1 bis 2 mm hat.

11. Verbindung nach Anspruch 10, dadurch gekennzeichnet, daß der Längskanal (15) eine Breite von 3 bis 6 mm und eine Höhe von 1, 5 bis 4 mm hat.

**Claims**

1. A connection of two components, especially two synthetic plastics half-shells for the suction system of an internal combustion engine, which components comprise connecting flanges with sealing surfaces facing one another and external under-cut or relieved portions, with a connecting element of clip type in cross-section which is produced by a surrounding injection or casting method arranged to grasp around the edges and under-cut portions of the connection flanges, characterised in that at least one of the components (half shells 1, 2) surrounding a cavity (3 or 4) is provided on its connection flange (5) adjoining its inner wall (12) with a narrow sealing edge (13) which protrudes towards the seal surface (6) of the other component and has an adhesive layer (11), and in that at least one of the connecting flanges (5) has a recess (14) which outwardly adjoins the sealing edge (13) in cross-section and which, with the other connecting flange, forms a longitudinal channel (15) extending parallel to the sealing edge (13), the channel being connected, at least in sections, with the cross-section of the clip-type connection element (8) and being filled out with the material of the connection element (8).

2. A connection according to Claim 1, characterised in that the connecting flanges (5) of the two components (half shells 1, 2) have sealing edges (13) facing one another with plane contact surfaces.

3. A connection according to Claim 1, characterised in that both connecting flanges (5) have a recess (14) which, together, substantially form the longitudinal channel (15).

4. A connection according to Claim 1, characterised in that, as well as the sealing edge (13), the walls of the longitudinal channel (15) are also provided with an adhesive layer (11').

5. A connection according to Claim 1 having a connecting element of generally C-shaped cross-section, characterised in that the outer edge (16) of each connecting flange (5) comprises recesses (17) extending transversely of the longitudinal channel (15) which are occupied by retaining flanges (18) of the connecting element (8) which extend approximately from one C-arm of the connecting element (8) to the other.

6. A connection according to Claim 5, characterised in that the retaining flanges (18) reach into the longitudinal channel (15) and merge into the material filling this channel.

7. A connection according to Claim 1, characterised in that each connecting flange (5) has on its side remote from the sealing surface, an engagement face (depression 19) for an injection-moulding or casting tool which establishes the connecting flange (5) in each case in a direction parallel to the plane of separation.

8. A connection according to Claim 7, characterised in that the engagement face is formed by a groove-type depression (19).

9. A connection according to Claim 8, characterised in that the depression (19) has oblique side walls (20, 21) of which one merges into the outer wall of the associated component (half shells 1, 2) and the other into the external contour of the clip-type connecting element (8).

10. A connection according to Claim 1, characterised in that, with a wall thickness of the components (half shells 1, 2) between 1 and 4 mm, the sealing edge (13) has a width of 1 to 2 mm.

11. A connection according to Claim 10, characterised in that the longitudinal channel (15) has a width of 3 to 6 mm and a height of 1.5 to 4 mm.

**Revendications**

1°) Assemblage de deux pièces de construction, en particulier de deux demi-coquilles en matière plastique destinées au dispositif d'aspiration d'un moteur à combustion interne, qui présentent des brides de jonction comportant des surfaces d'étanchéité tournées l'une vers l'autre, et des entailles arrière extérieures, pendant qu'un élément de jonction, dont la section transversale est en forme de pince, fabriqué par injection ou par coulée, entoure les bords et les entailles arrière des brides de jonction, assemblage caractérisé en ce qu'au moins une des pièces de construction (demi-coquilles 1, 2) entourant l'un des espaces creux (3, 4) comporte, adjacent à sa paroi intérieure (12), sur sa bride de jonction (5), un bord étroit (13) d'étanchéité s'avançant vers la surface d'étanchéité (6) de l'autre pièce de la construction, et qui est pourvu d'une couche d'adhésif (11), et qu'il est prévu, sur au moins une des brides de jonction (5), un évidement (14), qui est, en coupe transversale, adjacent au bord d'étanchéité (13) vers l'extérieur, qui forme, avec l'autre bride de jonction, un canal longitudinal (15), s'étendant parallèlement au bord d'étanchéité, qui communique, au moins par sections avec la section transversale de l'élément de jonction (8) en forme de pince et qui est rempli de la matière qui forme cet élément.

2°) Assemblage suivant la revendication 1, caractérisé en ce que les brides (5) de jonction des deux pièces de la construction (demi-coquilles 1, 2) portent des bords d'étanchéité (13) tournés l'un vers l'autre avec des surfaces de contact planes.

3°) Assemblage suivant la revendication 1, caractérisé en ce que les deux brides de jonction (5) présentent, chacune, un évidement (14) qui forme sensiblement en commun le canal longitudinal (15).

4°) Assemblage suivant la revendication 1, caractérisé en ce que, en plus du bord d'étanchéité (13), les parois du canal longitudinal (15) sont aussi pourvues d'une couche d'adhésif (11').

5°) Assemblage suivant la revendication 1 comportant un élément de jonction dont la section transversale est à peu près en forme de C, caractérisé en ce que le bord extérieur (16) de chacune des brides de jonction (5) présente des évidements (17) s'étendant perpendiculairement au canal longitudinal (15) qui sont remplis par des barrettes de fixation (18) de l'élément (8) de jonction, qui s'étendent d'une aile du C de l'élément (8) à l'autre.

6°) Assemblage suivant la revendication 5, caractérisé en ce que les barrettes de fixation (18) vont jusque dans le canal longitudinal (15), et se perdent dans la matière qui remplit ce canal.

7°) Assemblage suivant la revendication 1, caractérisé en ce que chacune des brides (5) de jonction possède sur sa face tournée a l'opposé de la surface d'étanchéité, une surface d'attaque (renforcement 19) pour un outil d'injection ou de coulée, qui bloque chaque fois la bride de jonction (5) dans une direction parallèle au plan de séparation.

8°) Assemblage suivant la revendication 7, caractérisé en ce que la surface d'attaque est formée par un renfoncement (19) en forme de rigole.

9°) Assemblage suivant la revendication 8, caractérisé en ce que le renfoncement (19) possède des parois latérales (20, 21) obliques dont l'une se convertit en la paroi extérieure de la pièce de construction afférente (demi-coquille 1, 2) et l'autre, en le contour extérieur de l'élément (C) de jonction en forme de pince.

10°) Assemblage suivant la revendication 1, caractérisé en ce que si les pièces de construction (demi-coquilles 1, 2) ont une épaisseur de paroi entre 1 et 4 mm, le bord d'étanchéité (13) a une largeur de 1 à 2 mm.

11°) Assemblage suivant la revendication 10, caractérisé en ce que le canal longitudinal (15) a une longueur de 3 à 6 mm et une hauteur de 1,5 à 4 mm.

Fig.1

Fig.2

Fig.3

Fig.4

Fig.5